# EUROPÄISCHE PATENTSCHRIFT

(11) **EP 4 325 122 B1**
(45) Veröffentlichungstag und Bekanntmachung des Hinweises auf die Patenterteilung: **29.10.2025**
(21) Anmeldenummer: 23173617.4
(22) Anmeldetag: 16.05.2023
(51) Int. Cl.: F24C 15/00, F21V 8/00, H05B 6/64, F16J 15/02

(54) **GARGERÄT**
COOKING DEVICE
APPAREIL DE CUISSON

(30) Priorität: 16.08.2022 DE 102022120562
(43) Veröffentlichungstag der Anmeldung: 21.02.2024
(73) Patentinhaber: BJB GmbH & Co. KG, 59755 Arnsberg (DE)
(72) Erfinder: Henrici, Philipp, 59755 Arnsberg (DE); Baumeister, Olaf, 59846 Sundern (DE); Matthias Mietner, Matthias, 59821 Arnsberg (DE)
(74) Vertreter: Ostriga Wirths und Vorwerk Patentanwälte PartGmbB

(56) Entgegenhaltungen:
- EP-A1- 4 033 861
- DE-A1- 102015 003 269
- DE-B1- 2 937 499
- DE-U- 7 436 616
- US-A1- 2021 127 885

## Beschreibung

Die Erfindung betrifft ein Gargerät mit den Merkmalen des Oberbegriffs des Anspruch 1.

Es gibt eine Vielzahl unterschiedlicher Gargerätetypen zur Zubereitung von Nahrungsmitteln, sowohl für private Haushalte wie auch für Gastronomie und Großküchen. Hierzu zählen vornehmlich Backöfen, Dampfgargerät sowie Mikrowellengargeräte. Insbesondere im privaten Bereich existieren zwei gegenläufige Tendenzen. Zum einen besteht beim Verbraucher der Wunsch, jede Garform nutzen zu können, um die komplette Bandbreite der Nahrungsmittelzubereitung, beginnend mit vorgefertigten Nahrungsmitteln (Convenience Food) im Mikrowellengerät über Standardgerichte im Backofen wie besonders schonende Gemüse- und Fischgarvorgänge im Dampfgarer vornehmen zu können. Dem gegenüber steht zum einen, dass das Kochen in privaten Haushalten zunehmend weniger häufig durchgeführt wird und dass häufig in den Küchen nicht ausreichend Platz für die hohe Geräteanzahl vorhanden ist.

Die Industrie ist deshalb dazu übergegangen, Kombinationsgeräte herzustellen. Insbesondere sind bislang Backöfen und Mikrowellengeräte zu einem Kombigerät zusammengefasst worden.

Eine besondere Bedeutung kommt der Garraumbeleuchtung der Gargeräte zu. Diese ermöglicht es, den Garvorgang zu beobachten und den Garzustand optisch zu kontrollieren, indem das Gargut möglichst optimal ausgeleuchtet ist. Moderne Leuchtmittel, insbesondere LEDs, ermöglichen neuartige Ausleuchtungskonzepte, bedürften jedoch angepasster Konstruktionen.

So zeigt die EP 3 820 249 A1 der Anmelderin beispielsweise eine Dichtungsanordnung für einen Lichtleitstab. Die Dichtungsanordnung sitzt in einer Ausnehmung der Garraumwandung ein und nimmt den Lichtleitstab in sich auf. Als Dichtelement dient ein Graphitring, der außen umfänglich am Lichtleitstab anliegt und das Austreten von Kochdünsten aus dem Garraum durch die zu Beleuchtungszwecken vorhandene Öffnung der Garraumwandung verhindert. Der Graphitring ist geschlitzt und mit minimalem Untermaß gefertigt, sodass ein in den Graphitring eingeschobener Lichtleitstab den Graphitring minimal weitet und die Rückstellkräfte des Graphitrings für ein umfängliches Anliegen am Glasstab sorgen. Der Graphitring ist mit derart hoher Maßgenauigkeit gefertigt, dass im Idealfall die Wärmeausdehnung des Graphitrings bei üblichen Gartemperaturen zu einer Verringerung bzw. zu einem Verschließen des Schlitzes führt. Der Vorteil dieser Dichtung ist darin zu sehen, dass sie pyrolysefest ist und die mit der Pyrolyse einhergehenden hohen Temperaturen von bis zu 500 Grad unbeschadet übersteht.

Im gattungsfremden Anwendungsbereich der Kabelabdichtungen existiert mit DE 10 2015 003 269 A1 eine Lösung, die mit einem ersten Dichtring axial gegen ein Blech und mit einem zweiten Dichtring radial gegen ein Kabel, ein Rohr oder einen Schlauch abdichtet.

In Hinblick auf ein Kombinationsgerät, welches auch eine Dampfgarfunktion beinhaltet, insbesondere in Hinblick auf ein Kombinationsgerät, welches die Backofen-, Mikrowellen- und Dampfgarfunktion miteinander kombiniert, ist eine neue Abdichtung gefordert, die auch dem im Garraum entstehenden Dampfdruck standhält.

Aufgabe der Erfindung ist es, ein Gargerät mit Leuchte und Dichtungsanordnung bereitzustellen, die die Durchtrittsöffnung für eine Beleuchtungseinrichtung bei einem einsitzenden Lichtleitstab in einem vornehmlich pyrolysefähigen Backofen mit Dampfgarfunktion sicher zum Außenraum hin abdichtet.

Die US 2021/127885 A1 offenbart eine Beleuchtungsvorrichtung für ein Gargerät.

Gelöst wird die Aufgabe der Erfindung von einem Gargerät mit den Merkmalen des Anspruchs 1, insbesondere mit dessen kennzeichnenden Merkmalen.

Das Gargerät löst die Erfindungsaufgabe mittels der Dichtungsanordnung und zwar durch die Kombination ihrer wesentlichen, anspruchsgemäßen Merkmale. Zunächst verfügt das Halteteil mit dem ersten wie dem zweiten Dichtring über zwei Dichtelemente, wobei der erste im Sackloch angeordnete Dichtring gegen einen einzusetzenden Lichtleitstab abdichtet. Der zweite Dichtring dichtet gegenüber der Garraumwandung. Dabei sitzt der zweite Dichtring bei bestimmungsgemäßem Gebrauch auf der dem Garinnenraum abgewandten Seite der Garraumwandung, ebenso ist auch der erste Dichtring garraumabseits der Wandung angeordnet. Hierdurch verringert sich die Temperaturbelastung der Dichtringe im Regelbetrieb, insbesondere aber auch bei Pyrolysevorgängen in Pyrolysefähigen Gargeräten.

Beide Dichtringe erreichen ihre Dichtwirkung, indem über den Quetschring bzw. Ankerring eine Dichtkraft auf den jeweiligen Dichtring ausgeübt wird. Diese Dichtkraft führt zu einer Verformung des jeweiligen Dichtrings und auf diese Weise zu einem engen Sitz an einem den ersten Dichtring durchstoßenden Lichtleitstab und an einer am zweiten Dichtring anliegenden Garraumwand.

Die Dichtringe sind hierzu aus elastischen Materialien gebildet, wobei die Dichtringe aufgrund der vorgesehen Einsatzzwecke in Backofen-Kombinationsgeräten als hochtemperaturbeständige Elastomere, oder insbesondere bei pyrolysefähigen Geräten, als rückstellelastische Graphit-Hybridbauteile ausgebildet sind.

Die Anordnung der Dichtringe in einem gemeinsamen Halteteil verringert die Bauteilanzahl und erleichtert die Montage. Dabei durchstößt der Ankerstutzen in bevorzugter Ausführungsform eine Durchbrechung in der Garraumwand eines Gargerätes. Der auf dem Ankerstutzen befestigte Ankerring hält die Dichtungsanordnung - gegebenenfalls auch die in ihr gehaltene Leuchte - mechanisch an der Garraumwand.

Das Halteteil, der Quetschring und der Ankerring sind in bevorzugter Ausführungsform als Keramikbauteile ausgebildet.

Es ist insbesondere bevorzugt, wenn der Quetschring der Dichtungsanordnung im Sackloch mittels einer ersten Gewindepaarung von Quetschring und Sacklochwandung einbringbar ist.

**In** analoger Anwendung ist vorgesehen, dass der Ankerring mittels einer zweiten Gewindepaarung von Ankerring und Ankerstutzenwandung am Ankerstutzen befestigbar ist.

Der wesentliche Vorteil der Festlegung von Quetschring und Ankerring an ihrem jeweiligen Gegenpart über eine Gewindepaarung liegt in der Möglichkeit, beim Zusammensetzen der Dichtungsanordnung und deren Befestigung an einer Garraumwandung Fertigungstoleranzen ausgleichen zu können.

Es ist jedoch möglich - auch bei keramischer Ausführung von Halteteil, Quetschring und Ankerring - den Quetschring und den Ankerring am Halteteil über Rastverbindungen festzulegen. Wenn die Rastorgane mehrere, in ihrer in Einschubrichtung gemessenen Tiefe hintereinander angeordnete Rastpositionen zulassen, ist es auch mittels einer solchen Rastverbindung möglich, Materialtoleranzen ausgleichen zu können und dabei eine konstant hohe Dichtkraft auf die Dichtflächen ausüben zu können.

Vorgesehen ist ferner, dass zwischen dem Quetschring und dem ersten Dichtring ein Stützring angeordnet ist, welcher die Dichtkraft vom Quetschring auf den Dichtring überträgt.

Ein solcher Stützring verhindert, dass das über den Quetschring auf den ersten Dichtring aufgebrachte Drehmoment bei Nutzung einer Gewindepaarung zu einer Torsionsverformung des ersten Dichtrings führt. Darüber hinaus wird verhindert, dass Anzugsdrehmomente durch die Reibung zwischen Quetschring und Dichtring verfälscht werden.

Wie bereits vorbeschrieben, hat es erhebliche Vorteile, wenn die zwei Dichtringe auf der dem Garraum abgewandten Seite der Garraumwandung angeordnet sind. Neben einer geringeren Temperaturbelastung ist hier auch die Belastung mit Kochdünsten geringer, sodass ein Verschmutzen und in Folge dessen ein Festbacken der Dichtringe am Halteteil und an der Garraumwandung vermieden wird.

Von besonderem Vorteil ist es, wenn die Leuchte mittels der Anbindung der Dichtungsanordnung an der Garraumwandung, insbesondere durch den in der Aufnahmebohrung einsitzenden Lichtleitstab, mechanisch gehalten ist.

Weitere Vorteile der Erfindung sowie ein besseres Verständnis derselben sind der nachfolgenden Beschreibung eines Ausführungsbeispiels zu entnehmen. Es zeigen
Fig. 1: eine perspektivische Darstellung der Dichtungsanordnung, einsitzend in einer Garraumwandung des erfindungsgemäßen Gargeräts mit aufgenommenen Lichtleitstab,
Fig. 2: eine Ansicht auf die Darstellung gemäß Fig. 1 von oben,
Fig. 3. eine Schnittdarstellung gemäß Fig. 2, Schnittlinie III-III,
Fig. 4: die Anordnung gemäß Fig. 1 in Explosionsansicht,
Fig. 5: die Schnittdarstellung gemäß Fig. 3 in Explosionsansicht.

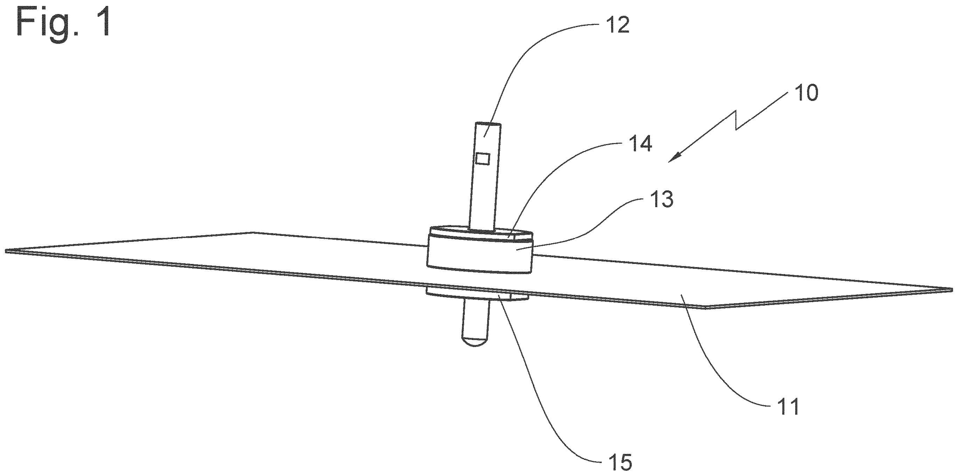

Fig. 1 zeigt die insgesamt mit der Bezugsziffer 10 versehene Dichtungsanordnung festgelegt in einer Garraumwandung 11. In der Dichtungsanordnung 10 ist eine Lichtleitstab 12 einer Leuchte für ein Gargerät angeordnet. In Fig. 1 sieht man, dass die Dichtungsanordnung ein Halteteil 13, einen Quetschring 14 und einen Ankerring 15 umfasst.

In den Darstellungen des Ausführungsbeispiels ist die Garraumwandung 11 schematisch als viereckiges, im Wesentlichen quadratisches Blech dargestellt, also als ein Teil bzw. ein Ausschnitt aus einer Wandung, die einen Garraum eines Gargerätes umgibt.

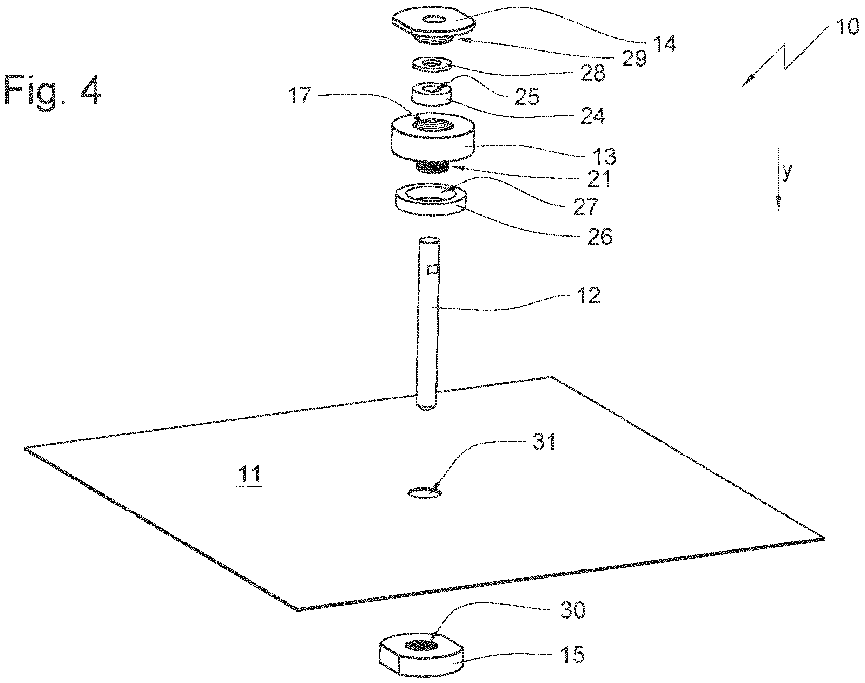

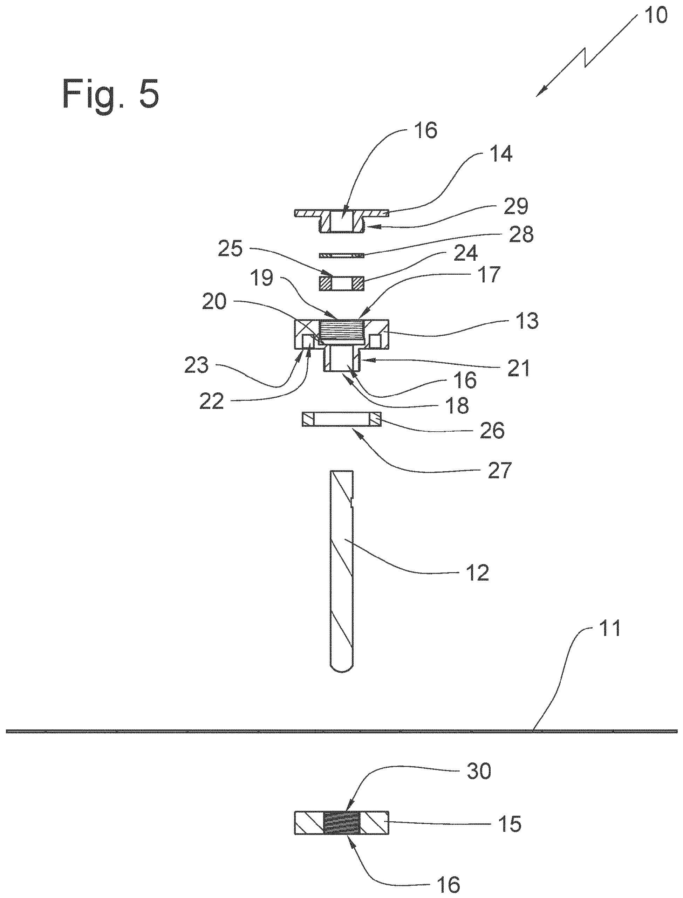

Die einzelnen Teile der Dichtungsanordnung 10 werden nun anhand der Fig. 4 und 5 vorgestellt. Hierbei handelt es sich um Explosionsansichten in Perspektive (Fig. 4) bzw. um Schnitt gemäß Schnittlinie III-III (Fig. 5).

Die Dichtungsanordnung 10 ist dazu ausgebildet, einen Lichtleitstab 12 in Einschubrichtung Y aufzunehmen. Hierzu ist die Dichtungsanordnung 10, also auch das Halteteil 13 mit einer Aufnahmebohrung 16 versehen, die das Halteteil 13 in Einschubrichtung Y vollständig durchsetzt. Diese Aufnahmebohrung 16 durchsetzt in gleicher Weise den Quetschring 14 und auch den Ankerring 15. Soweit ist die Dichtungsanordnung 10 mit ihrem Halteteil 13, dem Quetschring 14 und dem Ankerring 15 von einem durchgehenden Aufnahmekanal durchsetzt. Dieser fällt mit der Aufnahmebohrung 16 des Halteteils 13, des Quetschrings 14 und des Ankerrings 15 zusammen.

Die Aufnahmebohrung 16 des Halteteils 13 verfügt über eine obenliegende Eintrittsöffnung 17 und eine unten liegende Austrittsöffnung 18.

Das Halteteil 13 ist darüber hinaus mit einem Sackloch 19 versehen. Das Sackloch 19 ist konzentrisch zur Aufnahmebohrung 16 angeordnet, sein Durchmesser ist jedoch größer als der Durchmesser der Aufnahmebohrung 16 des Halteteils 13. Die Sacklochöffnung fällt mit der Eintrittsöffnung 17 des Halteteils 13 zusammen.

Der Sacklochboden bildet eine Stützfläche 20 aus, die die das Sackloch 19 durchsetzende Aufnahmebohrung 16 ringartig umgibt.

Konzentrisch zur Aufnahmebohrung 16 bildet das Halteteil 13 einen Ankerstutzen 21 aus, der sich in Einschubrichtung Y von der Eintrittsöffnung 17 weg erstreckt und an dessen freien Ende die Austrittsöffnung 18 der Aufnahmebohrung 16 des Halteteils 13 angeordnet ist.

An der der Eintrittsöffnung 17 gegenüberliegenden Unterseite des Halteteils 13 ist sodann eine Aufnahmenut 22 ausgebildet, deren Nutöffnung 23 gleichgerichtet mit der Austrittsöffnung 18 und somit der Sacklochöffnung entgegengerichtet ist. Die Aufnahmenut 22 ist ringförmig um den Ankerstutzen 21 herum und konzentrisch zur Aufnahmebohrung 16 angeordnet.

Die Dichtungsanordnung 10 umfasst sodann einen ersten Dichtring 24, der dazu vorgesehen ist, auf der Stützfläche 20 im Sackloch 19 aufzuliegen und dessen Ringöffnung 25 mit der Aufnahmebohrung 16 fluchtet.

Ein zweiter Dichtring 26 ist dazu vorgesehen, in der Aufnahmenut 22 einzusitzen. Auch die Ringöffnung 27 ist konzentrisch zur Aufnahmebohrung 16 des Halteteils 13 angeordnet.

Optional ist ein Stützring 28 vorgesehen, der im Sackloch 19 einsitzt und auf dem ersten Dichtring 24 aufliegt. Der optionale Stützring 28 ist somit zwischen dem Quetschring 14 und dem ersten Dichtring 24 angeordnet.

Der Quetschring 14 verfügt über einen in Richtung Halteteil 13 weisenden und konzentrisch zur Aufnahmebohrung 16 angeordneten Gewindestutzen 29, der mit einem Außengewinde versehen ist. Die Sackloch-Umfangswand verfügt ebenfalls über ein Gewinde. Das Außengewinde des Gewindestutzens 29 des Quetschrings 14 und das Gewinde der Sackloch-Umfangswand bilden eine Gewindepaarung, über welche der Quetschring 16 in das Sackloch 19 des Halteteils 13 eingeschraubt werden kann.

Zur Dichtungsanordnung 10 gehört sodann - wie schon vorerwähnt - der Ankerring 15. Der Ankerring 15 verfügt über eine Innenumfangswand, die den Ringraum 30 des Ankerrings 15 begrenzt. Diese Wand ist mit einem Gewinde versehen, welches sein Gegenstück in einem außenumfänglichen Gewinde an der Außenumfangswand des Ankerstutzens 21 findet. Beide Gewinde bilden eine Gewindepaarung, mittels derer der Ankerring 15 auf den Ankerstutzen 20 aufschraubbar ist. Es ist anhand der Figuren 4 und 5 nun leicht vorstellbar, dass beim Einschrauben des Quetschrings 14 in das Sackloch 19 eine Dichtkraft auf den ersten Dichtring 24 aufgebracht werden kann, wobei sich hierbei - eine ausreichende Dichtkraft vorausgesetzt - der Ringraum des ersten Dichtrings 24 verengen wird. Ein Aufschrauben des Ankerrings 15 auf den Ankerstutzen 21 bringt eine Dichtkraft auf den in der Aufnahmenut 22 einsitzenden zweiten Dichtring 26 auf, welcher gegenüber der Nuttiefe mit axialem, also in Einschubrichtung Y gerichteten Übermaß gefertigt ist. Dieser zweite Dichtring 26 erfährt eine axiale Stauchung durch die über den Ankerring 15 aufgebrachte Dichtkraft. Auch diese führt zu einer radialen Formveränderung, sodass der zweite Dichtring 26 satt an den Innenumfangsflächen der Aufnahmenut 22 anliegt.

Die Dichtungsanordnung 10 kann in einer Ausführungsform Teil einer nicht im Einzelnen dargestellten Leuchte für ein Gargerät sein. Von einer solchen Gargeräteleuchte ist exemplarisch der Lichtleitstab 12 in den Figuren gezeigt, der in Einschubrichtung Y in die Aufnahmebohrungen 16 bzw. den Aufnahmekanal der Dichtungsanordnung 10 eingesetzt und dort gehalten ist. Die vom Quetschring 14 auf den ersten Dichtring 24 aufgebrachten Dichtkräfte führen - wie bereits oben erwähnt - zu einer Durchmesserverringerung des Ringraumes. Ein in der Dichtungsanordnung 10 einsitzender, insbesondere vom ersten Dichtring 24 umschlossener Lichtleitstab 12 bietet mit seiner Außenumfangswand somit eine Gegendichtfläche. Ein an der Außenumfangswand des Lichtleitstabes 12 anliegender erster Dichtring 24 dichtet somit die Aufnahmebohrung 16 gegen den Durchtritt von Fluiden sicher ab.

Erfindungsgemäß ist die Dichtungsanordnung 10 Teil eines Gargerätes, von welchem in den Darstellungen lediglich ein Ausschnitt der Garraumwandung 11 dargestellt ist. Als Teil eines Gargerätes trägt die Dichtungsanordnung 10 zumindest den Lichtleitstab 12 einer Gargeräteleuchte wie zuvor beschrieben. Der zweite Dichtring 26 liegt auf der Außenseite der Garraumwandung 11 auf, wobei der Ankerstutzen 21 eine Wandöffnung 31 der Garraumwandung 11 durchtritt. Auf der gegenüberliegenden Seite, in der Regel der Innenseite der Garraumwandung 11 wird, wird der Ankerring 15 auf den Ankerstutzen 21 aufgesetzt. Eine Verschraubung hat zur Folge, dass das Halteteil 13 gegen die Garraumwandung 11 gezogen wird und hierbei der zweite Dichtring 26 einerseits ausfüllend in die Aufnahmenut 22 und andererseits an die Außenseite der Garraumwandung gepresst wird. Auf diese Weise wird über die Dichtungsanordnung 10 der Durchtrittsraum für den Lichtleitstab 12 sowohl gegen den Lichtleitstab 12 als auch gegen die Garraumwandung 11 abgedichtet.

Auf diese Weise ist die Dichtungsanordnung 10 in der Lage, eine Abdichtung für eine Gargeräteleuchte gegenüber der Garraumwandung 11 eines Gargerätes herzustellen, die den üblichen Kochdünsten beim Garen in Backöfen, aber insbesondere auch dem Dampfdruck bei Kombinationsgeräten, die eine Backofenfunktion und eine Dampfgarfunktion vereinen, sicherzustellen.

Anstelle der Gewindepaarungen zum Festsetzen von Quetschring 14 und Ankerring 15 sind auch Rastorgane vorstellbar, bevorzugt solche, die in Einschubrichtung Y mehrere hintereinander angeordnete Raststellungen gewährleisten, um die Eintauchtiefe des Quetschrings 14 im Sackloch 19 einerseits sowie des Ankerstutzes 21 im Ankerring 15 andererseits variieren zu können und somit die aufzubringenden Dichtkräfte oder auch Materialtoleranzen berücksichtigen zu können.

Die Dichtringe 24 und 26 sind auf der Außenseite der Garraumwandung 11 angeordnet und somit den Gar- und gegebenenfalls Pyrolysetemperaturen weniger ausgesetzt als Dichtringe, die unmittelbar in der Wandöffnung 31 oder auf der Innenseite der Garrauminnenwandung 11 befindlich sind. Auf diese Weise wird die Temperaturbelastung der Dichtringe 24 und 26 vermindert.

Die Dichtringe 24 und 26 können aus einem Elastomer gefertigt sein, wobei es sich hier in der Regel um einen hochtemperaturbeständigen Hochleistungselastomer handeln wird. Vorteilhaft sind jedoch Graphit-Hybridbauteile, deren Elastizität zwar vergleichsweise gering ist und welche deswegen mit hoher Präzision gefertigt werden müssen, deren Temperaturbeständigkeit jedoch auch für pyrolysefähige Geräte geeignet ist.

Der optionale Stützring, welcher in Einschubrichtung Y auf dem ersten Dichtring 24 aufliegt und so zwischen dem Quetschring 14 und dem ersten Dichtring 24 angeordnet ist, verhindert eine Reibung des Quetschrings 14 auf dem ersten Dichtring 24. Auf diese Weise wird verhindert, dass sich die beim Einschrauben des Quetschrings 14 vorhandenen Torsionskräfte auf den ersten Dichtring 24 übertragen.

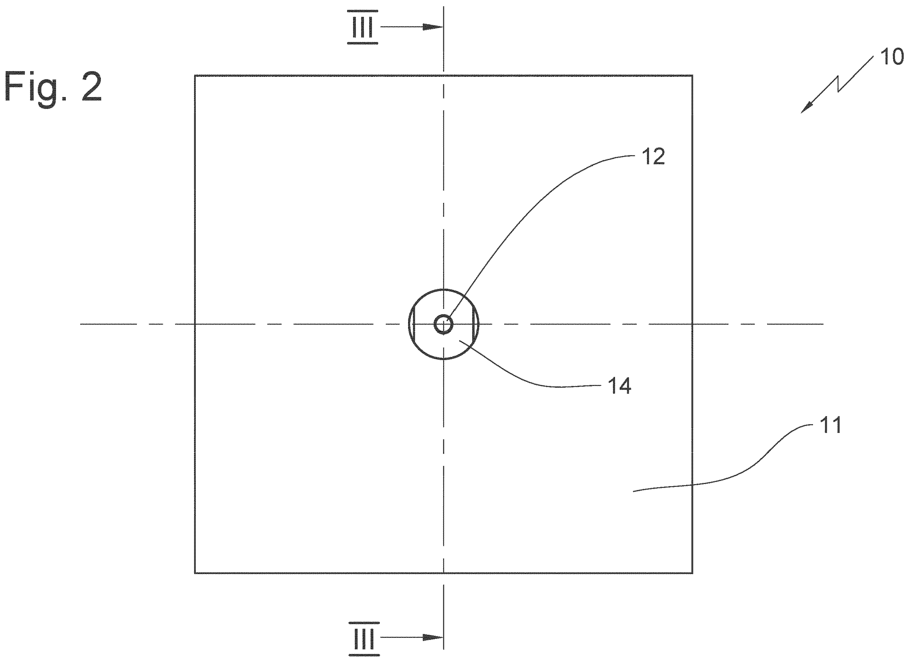

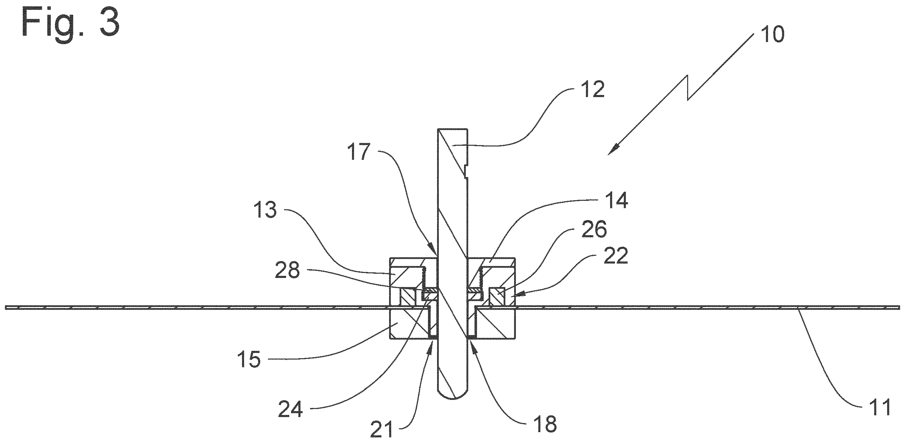

Fig. 3 zeigt noch einmal eine Schnittansicht gemäß Schnittlinie III-III in Fig. 2, bei welcher die Einzelbauteile der Dichtungsanordnung 10 zusammengesetzt sind und die Dichtungsanordnung 10 als Teil eines Gargerätes mit einer Gargeräteleuchte in der Garraumwandung 11 verankert ist.

Bei dieser Darstellung sitzt der Lichtleitstab 12 in der Dichtungsanordnung 10 ein. Er tritt durch die Eintrittsöffnung 17 der Dichtungsanordnung 10 ein und verlässt diese mit seinem Ende durch die Austrittsöffnung 18 der Dichtungsanordnung 10, sodass Licht einer nicht dargestellten Lichtquelle in den Garraum eines lediglich durch seine Garraumwandung 11 dargestellten Gargerätes eingebracht werden kann.

Der Quetschring 14 ist in das Halteteil 13 eingesetzt und sitzt - gegebenenfalls unter Zwischenlage eines Stützrings 28 - auf dem ersten Dichtring 24 auf. Dieser wird durch die aufgebrachten Dichtkräfte des Quetschrings 14 gestaucht, wodurch sich der Durchmesser des Ringraums der ersten Dichtung 24 verengt. Diese liegt dann dichtend an der Außenoberfläche des Lichtleitstabes 12 an. Auf diese Weise wird ein Fluidaustritt entlang des Lichtleitstabes 12 durch die Aufnahmebohrung 16 hindurch sicher verhindert.

Der Ankerstutzen 21 des Halteteils 13 durchstößt die Wandöffnung 31 der Garraumwandung 11. Auf den Ankerstutzen 21 ist von der dem Halteteil 13 gegenüberliegenden Garraumwandungsseite der Ankerring 15 aufgesetzt. Auf diese Weise kommt die Garraumwandung 11 zwischen dem Ankerring 15 und der Unterseite des Halteteils 13 zur Anlage.

Der in der Aufnahmenut 22 einsitzende zweite Dichtring liegt an der Garraumwandung 11 an. Der Ankerring 15 übt nunmehr Dichtkräfte auf den zweiten Dichtring 26 aus, welcher - gefertigt mit axialem Übermaß gegenüber der Nuttiefe - axial in die Aufnahmenut 22 eingepresst wird. Die hierdurch entstehende, rückstellelastische Verformung des zweiten Dichtrings 26 führt einerseits zu dessen dichtender Anlage an der Wandung der Aufnahmenut 22 und andererseits auch zu einer dichtenden Anlage an der Garraumwandung 11. Ein Fluidaustritt entlang der Grenzflächen zwischen Ankerring 15 und Ankerstutzen 21 und weiter entlang der Grenzfläche zwischen der Halteteilunterseite und der Garraumwandung 11 ist somit sicher vermieden.

Anhand der vorangegangenen Beschreibung der Erfindung wird nun deutlich, dass hier zunächst eine einfach aufgebaute, jedoch in vielerlei Hinsicht vorteilhafte Dichtungsanordnung 10 geschaffen wurde. Unter Einsatz möglichst weniger Bauteile wird eine Abdichtung sowohl entlang der Aufnahmebohrung 16 für einen Lichtleitstab 12 als auch eine Abdichtung der Wandöffnung 31 einer Garraumwandung 11 realisiert. Über das Aufbringen von Dichtkräften auf die zur Abdichtung vorgesehenen Dichtringe 24 und 26 ist eine Abdichtung insbesondere auch gegenüber einem im Garinnenraum vorherrschenden Dampfdruck bei einem Gargerät mit Dampfgarfunktion möglich.

Die Aufnahme des ersten Dichtrings 24 und des zweiten Dichtrings 26 in einem gemeinsamen Halteteil 13 vereinfacht die Dichtungsanordnung 10 durch Bauteilreduktion und ermöglicht eine Vormontage, die den Transport und den sachgerechten Einsatz der Dichtungsanordnung 10 bei der Herstellung einer Garraumleuchte oder eines Gargerätes vereinfacht. Vorgestellt wurde dann eine Garraumleuchte, die die erfindungsgemäße Dichtungsanordnung 10 umfasst. Diese zeichnet sich durch einen Lichtleitstab 12 aus, welcher die Aufnahmebohrung 16 der Dichtungsanordnung 10 durchsetzt. Dabei ist der Lichtleitstab 12 nicht nur durch den ersten Dichtring 24 in der Dichtungsanordnung 10 eingedichtet. Der Lichtleitstab 12 wird in der Dichtungsanordnung 10 auch mechanisch gehalten. Wenn die Lichtquelle mechanisch am Lichtleitstab 12 festgelegt ist, kann die Dichtungsanordnung 10 so auch der mechanischen Halterung der Gargeräteleuchte dienen.

Es wurde ein erfindungsgemäßes Gargeräts vorgestellt, welches eine Gargeräteleuchte mit einer Dichtungsanordnung 10 enthält. Bei diesem Gargerät wird die Dichtungsanordnung 10 durch den Ankerstutzen 21 und dem dort aufgesetzten Ankerring 15 mechanisch an der Garraumwandung 11 gehalten. Über die Festlegung der Dichtungsanordnung 10 an der Garraumwandung 11 ist es möglich, die Gargeräteleuchte (siehe oben) mechanisch am Gargerät zu verankern.

Durch eine entsprechende Materialwahl, insbesondere Graphit-Hybridbauteile in Form der ersten und zweiten Dichtung 24, 26 wie auch durch die Herstellung von Quetschring 14, Ankerring 15 und Halteteil 13 aus keramischen Werkstoffen, ist es möglich, die Dichtungsanordnung 10 auch in Pyrolyse-fähigen Gargeräten zu verwenden.

In einer speziellen und bevorzugten Verwendung wird die Dichtungsanordnung 10 in Kombinationsgargeräten eingesetzt, die wenigstens eine Backofen- und eine Dampfgarfunktion miteinander vereinen.

### BEZUGSZEICHENLISTE

- 10: Dichtungsanordnung
- 11: Garraumwandung
- 12: Lichtleitstab
- 13: Halteteil
- 14: Quetschring
- 15: Ankerring
- 16: Aufnahmebohrung
- 17: Eintrittsöffnung von 13
- 18: Austrittsöffnung
- 19: Sackloch
- 20: Stützfläche
- 21: Ankerstutzen
- 22: Aufnahmenut
- 23: Nutöffnung
- 24: erster Dichtring
- 25: Ringöffnung
- 26: zweiter Dichtring
- 27: Ringöffnung
- 28: Stützring
- 29: Gewindestutzen von 14
- 30: Ringraum von 15
- 31: Wandöffnung

- Y: Einschubrichtung

## Patentansprüche

1. Gargerät, insbesondere Multifunktionsbackofen mit Dampfgarfunktion,
- mit einer Dichtungsanordnung (10),
- die Dichtungsanordnung (10) ist versehen mit einem Halteteil (13), welches mit einer das Halteteil (13) von oben nach unten durchsetzenden Aufnahmebohrung (16) versehen ist, in welche entlang einer Einschubrichtung Y ein Lichtleitstab (12) einsetzbar ist,
- die Dichtungsanordnung (10) ist versehen mit einem Sackloch (19), welches einen gegenüber der Aufnahmebohrung (16) größeren Durchmesser aufweist, konzentrisch zur Aufnahmebohrung im Halteteil (13) angeordnet ist und dessen Sacklochöffnung mit der in Einschubrichtung Y obenliegenden Eintrittsöffnung (17) der Aufnahmebohrung (16) zusammenfällt,
- die Dichtungsanordnung (10) ist versehen mit einer ersten Stützfläche (20), welche vom Sacklochboden gebildet ist und die das Sackloch (19) durchsetzende Aufnahmebohrung (16) ringartig umgibt,
- die Dichtungsanordnung (10) ist versehen mit einer konzentrisch zur Aufnahmebohrung (16) angeordneten Aufnahmenut (22), deren Nutöffnung in Einschubrichtung Y unten im Halteteil (13) ausgebildet ist und der Sacklochöffnung entgegengerichtet ist,
- die Dichtungsanordnung (10) ist versehen mit einem ersten Dichtring (24), der im Sackloch (19) angeordnet ist, auf der Stützfläche (20) aufliegt und dessen Ringraum (30) in etwa dem Durchmesser der Aufnahmebohrung (16) entspricht,
- die Dichtungsanordnung (10) ist versehen mit einem zweiten Dichtring (26), der in der Aufnahmenut (22) angeordnet ist und gegenüber der axialen Nuttiefe mit Übermaß gefertigt ist,
- mit einer Leuchte,
- die Leuchte ist versehen mit einem Lichtleitstab (12), der in der Aufnahmebohrung (16) des Halteteils (13) der Dichtungsanordnung einsitzt,
**dadurch gekennzeichnet, dass**
- die Dichtungsanordnung (10) ist versehen mit einem Ankerstutzen (21), der dem Halteteil (13) auf der Unterseite entspringt und konzentrisch zur Aufnahmebohrung (16) angeordnet ist,
- die Dichtungsanordnung (10) ist versehen mit einem Ankerring (15), der am Ankerstutzen (21) befestigbar ist,
- mit einer Öffnung in einer Garraumwandung (11) des Gargerätes, durch die der Ankerstutzen (21) mit dem im Ankerstutzen (21) einsitzenden Lichtleitstab (12) der Leuchte hindurchtritt,
- wobei der am Ankerstutzen (21) befestigte Ankerring (15) eine Dichtkraft auf den zweiten Dichtring (26) aufbringt,
- mit dem zweiten Dichtring (26), der an einer Oberfläche der Garraumwandung (11) anliegt und durch die Dichtkraft des Ankerrings (15) eine axiale Stauchung und einen dichtenden Sitz an der Garraumwandung (11) und in der Aufnahmenut (22) erfährt,
wobei
- die Dichtungsanordnung (10) mit einem Quetschring (14) versehen ist,
- der Quetschring (14) im Sackloch (19) verankerbar ist,
- der im Sackloch (19) verankerte Quetschring (14) eine Dichtkraft auf den ersten Dichtring (24) aufbringt,
- der erste Dichtring (24) ein hochtemperaturbeständiger Elastomer oder ein rückstellelastisches Graphit-Hybridbauteil ist und
- der erste Dichtring (24) durch die Dichtkraft des Quetschringes (14) eine Durchmesserverengung des Ringraumes erfährt und dichtend am Außendurchmesser des Lichtleitstabes (12) anliegt.

2. Gargerät nach Anspruch 1, **dadurch gekennzeichnet, dass** der Quetschring (14) im Sackloch (19) mittels einer ersten Gewindepaarung von Quetschring (14) und Sacklochwandung einbringbar ist.

3. Gargerät nach Anspruch 1 oder 2, **dadurch gekennzeichnet, dass** der Ankerring (15) mittels einer zweiten Gewindepaarung von Ankerring (15) und Ankerstutzenwandung am Ankerstutzen (21) befestigbar ist.

4. Gargerät nach einem der Ansprüche 1 bis 3, **dadurch gekennzeichnet, dass** zwischen dem Quetschring (14) und dem ersten Dichtring (24) ein Stützring (28) angeordnet ist, welcher die Dichtkraft vom Quetschring (14) auf den Dichtring (24) überträgt.

5. Gargerät nach Anspruch 1, **dadurch gekennzeichnet, dass** die zwei Dichtringe auf der dem Garraum abgewandten Seite der Garraumwandung angeordnet sind.

6. Gargerät nach Anspruch 1 oder 5, **dadurch gekennzeichnet, dass** die Leuchte mittels der Anbindung der Dichtungsanordnung (10) an der Garraumwandung (11) insbesondere durch den in der Aufnahmebohrung (16) einsitzenden Lichtleitstab (12) mechanisch gehalten ist.

7. Gargerät nach einem der vorhergehenden Ansprüche, **dadurch gekennzeichnet, dass** der erste Dichtring (24) als O-Ring ausgebildet ist,

## Claims

1. Cooking device, in particular a multifunctional oven with a steam cooking function,
- with a sealing arrangement (10),
- the sealing arrangement (10) is provided with a holding part (13), which is provided with a receiving bore (16) passing through the holding part (13) from top to bottom, into which a light guide rod (12) can be inserted along an insertion direction Y,
- the sealing arrangement (10) is provided with a blind hole (19) which has a larger diameter than the receiving bore (16) and is arranged concentrically to the receiving bore in the holding part (13), and whose blind hole opening coincides with the inlet opening (17) of the receiving bore (16) located at the top in insertion direction Y,
- the sealing arrangement (10) is provided with a first support surface (20) which is formed by the bottom of the blind hole and surrounds the receiving bore (16) passing through the blind hole (19) in a ring-like manner,
- the sealing arrangement (10) is provided with a receiving groove (22) arranged concentrically to the receiving bore (16), the groove opening of which is formed in insertion direction Y at the bottom of the holding part (13) and is directed counter to the blind hole opening,
- the sealing arrangement (10) is provided with a first sealing ring (24) which is arranged in the blind hole (19) and rests on the support surface (20), and whose annular space (30) corresponds approximately to the diameter of the receiving bore (16),
- the sealing arrangement (10) is provided with a second sealing ring (26) which is arranged in the receiving groove (22) and is manufactured with an oversize compared to the axial groove depth,
- with a lamp,
- the lamp is provided with a light guide rod (12) which is seated in the receiving bore (16) of the holding part (13) of the sealing arrangement,
**characterized in that**
- the sealing arrangement (10) is provided with an anchor socket (21) which originates from the holding part (13) on the underside and is arranged concentrically to the receiving bore (16),
- the sealing arrangement (10) is provided with an anchor ring (15) which can be fastened to the anchor socket (21),
- with an opening in a cooking chamber wall (11) of the cooking device through which the anchor socket (21) passes with the light guide rod (12) of the lamp seated in the anchor socket (21),
- wherein the anchor ring (15) fastened to the anchor socket (21) applies a sealing force to the second sealing ring (26),
- with the second sealing ring (26), which rests against a surface of the cooking chamber wall (11) and experiences axial compression and a sealing fit against the cooking chamber wall (11) and in the receiving groove (22) due to the sealing force of the anchor ring (15),
wherein
- the sealing arrangement (10) is provided with a compression ring (14),
- the compression ring (14) can be anchored in the blind hole (19),
- the compression ring (14) anchored in the blind hole (19) applies a sealing force to the first sealing ring (24),
- the first sealing ring (24) is a high-temperature-resistant elastomer or a resilient graphite hybrid component and
- the first sealing ring (24) experiences a diameter constriction of the annular space due to the sealing force of the compression ring (14) and rests in a sealing manner against the outer diameter of the light guide rod (12).

2. Cooking device according to claim 1, **characterized in that** the compression ring (14) can be inserted into the blind hole (19) by means of a first thread pairing of compression ring (14) and blind hole wall.

3. Cooking device according to claim 1 or 2, **characterized in that** the anchor ring (15) can be fastened to the anchor socket (21) by means of a second thread pairing of anchor ring (15) and anchor socket wall.

4. Cooking device according to one of claims 1 to 3, **characterized in that** a support ring (28) is arranged between the compression ring (14) and the first sealing ring (24), which support ring transfers the sealing force from the compression ring (14) to the sealing ring (24).

5. Cooking device according to claim 1, **characterized in that** the two sealing rings are arranged on that side of the cooking chamber wall facing away from the cooking chamber.

6. Cooking device according to claim 1 or 5, **characterized in that** the lamp is mechanically held by means of the connection of the sealing arrangement (10) to the cooking chamber wall (11), in particular by the light guide rod (12) seated in the receiving bore (16).

7. Cooking device according to one of the preceding claims, **characterized in that** the first sealing ring (24) is formed as an O-ring.

## Revendications

1. Appareil de cuisson, en particulier four multifonction avec fonction de cuisson à vapeur,
- avec un dispositif d'étanchéité (10),
- le dispositif d'étanchéité (10) est muni d'une partie de maintien (13), laquelle est munie d'un alésage de réception (16) qui traverse la partie de maintien (13) de haut en bas et dans lequel une tige de guidage de lumière (12) peut être mise en place le long d'une direction d'insertion **Y,**
- le dispositif d'étanchéité (10) est muni d'un trou borgne (19) qui présente un diamètre plus grand que l'alésage de réception (16), est disposé de manière concentrique par rapport à l'alésage de réception dans la partie de maintien (13) et dont l'ouverture de trou borgne coïncide avec l'ouverture d'entrée (17) de l'alésage de réception (16) qui est située en haut dans la direction d'insertion **Y,**
- le dispositif d'étanchéité (10) est muni d'une première surface d'appui (20) qui est formée par le fond du trou borgne et entoure de manière annulaire l'alésage de réception (16) traversant le trou borgne (19),
- le dispositif d'étanchéité (10) est muni d'une rainure de réception (22) qui est disposée de manière concentrique par rapport à l'alésage de réception (16) et dont l'ouverture de rainure est conçue dans la direction d'insertion Y en bas dans la partie de maintien (13) et est dirigée à l'opposé de l'ouverture de trou borgne,
- le dispositif d'étanchéité (10) est muni d'une première bague d'étanchéité (24) qui est disposée dans le trou borgne (19), repose sur la surface d'appui (20) et dont l'espace annulaire (30) correspond approximativement au diamètre de l'alésage de réception (16),
- le dispositif d'étanchéité (10) est muni d'une seconde bague d'étanchéité (26) qui est disposée dans la rainure de réception (22) et fabriquée avec une sur-dimension par rapport à la profondeur de rainure axiale,
- avec une lampe,
- la lampe est munie d'une tige de guidage de lumière (12) qui est mise en place dans l'alésage de réception (16) de la partie de maintien (13) du dispositif d'étanchéité,
**caractérisé en ce que**
- le dispositif d'étanchéité (10) est muni d'une douille d'ancrage (21) qui part de la partie de maintien (13) sur la face inférieure et est disposée de manière concentrique par rapport à l'alésage de réception (16),
- le dispositif d'étanchéité (10) est muni d'une bague d'ancrage (15) qui peut être fixée sur la douille d'ancrage (21),
- avec une ouverture dans une paroi de chambre de cuisson (11) de l'appareil de cuisson, à travers laquelle passe la douille d'ancrage (21) avec la tige de guidage de lumière (12) de la lampe mise en place dans la douille d'ancrage (21),
- dans lequel la bague d'ancrage (15) fixée sur la douille d'ancrage (21) applique une force d'étanchéité sur la seconde bague d'étanchéité (26),
- avec la seconde bague d'étanchéité (26), qui est installée sur une surface de la paroi de chambre de cuisson (11) et subit par la force d'étanchéité de la bague d'ancrage (15) un tassement axial et un ajustement d'étanchéité contre la paroi de chambre de cuisson (11) et dans la rainure de réception (22),
dans lequel
- le dispositif d'étanchéité (10) est muni d'une bague de sertissage (14),
- la bague de sertissage (14) peut être ancrée dans le trou borgne (19),
- la bague de sertissage (14) ancrée dans le trou borgne (19) applique une force d'étanchéité sur la première bague d'étanchéité (24),
- la première bague d'étanchéité (24) est un élastomère résistant à haute température ou un composant hybride en graphite élastique en rappel et
- la première bague d'étanchéité (24) subit par la force d'étanchéité de la bague de sertissage (14) une diminution de diamètre de l'espace annulaire et vient s'installer de manière étanche sur le diamètre extérieur de la tige de guidage de lumière (12).

2. Appareil de cuisson selon la revendication 1, **caractérisé en ce que** la bague de sertissage (14) peut être introduite dans le trou borgne (19) à l'aide d'une première paire de filetages de la bague de sertissage (14) et de la paroi de trou borgne.

3. Appareil de cuisson selon la revendication 1 ou 2, **caractérisé en ce que** la bague d'ancrage (15) peut être fixée sur la douille d'ancrage (21) à l'aide d'une seconde paire de filetages de la bague d'ancrage (15) et de la paroi de douille d'ancrage.

4. Appareil de cuisson selon l'une des revendications 1 à 3, **caractérisé en ce que**, entre la bague de sertissage (14) et la première bague d'étanchéité (24), est disposée une bague d'appui (28) qui transmet la force d'étanchéité de la bague de sertissage (14) à la bague d'étanchéité (24).

5. Appareil de cuisson selon la revendication 1, **caractérisé en ce que** les deux bagues d'étanchéité sont disposées sur le côté de la paroi de chambre de cuisson qui est opposé à la chambre de cuisson.

6. Appareil de cuisson selon la revendication 1 ou 5, **caractérisé en ce que** la lampe est maintenue mécaniquement à l'aide de la liaison du dispositif d'étanchéité (10) sur la paroi de chambre de cuisson (11) en particulier par la tige de guidage de lumière (12) mise en place dans l'alésage de réception (16).

7. Appareil de cuisson selon l'une des revendications précédentes, **caractérisé en ce que** la première bague d'étanchéité (24) est conçue sous la forme d'un joint torique.
